# EUROPEAN PATENT APPLICATION

(11) **EP 4 835 855 A1**
(43) Date of publication of application: **04.11.2026**
(21) Application number: 26172108.8
(22) Date of filing: 14.04.2026
(51) Int. Cl.: G07F 19/00

(54) **REMOTE CUSTOMER SERVICE SYSTEM AND REMOTE CUSTOMER SERVICE METHOD**

(30) Priority: 25.04.2025 JP 2025073254
(71) Applicant: GLORY LTD., Himeji-shi Hyogo 670-8567 (JP)
(72) Inventor: HIEDA, Tatsumi, Himeji-shi, Hyogo, 670-8567 (JP); MORITA, Tomohito, Himeji-shi, Hyogo, 670-8567 (JP)
(74) Representative: SSM Sandmair

(57) **Abstract**

A remote customer service system includes a money handling apparatus installed in a first facility and an operator terminal located at a second facility different from the first facility. The money handling apparatus includes a first communication interface and first circuitry. The first circuitry controls the first communication interface to transmit a discrepancy error to the operator terminal in a case where the first circuitry detects the discrepancy error related to a discrepancy occurring in the money handling apparatus. The operator terminal includes a second communication interface and second circuitry. The second circuitry controls the second communication interface to establish a connection with a customer terminal installed in the first facility and executes a remote customer service based on receiving the discrepancy error.

## Description

### TECHNICAL FIELD

The present disclosure relates to a remote customer service system and a remote customer service method capable of providing support for a user operating a money handling apparatus installed in a store.

### BACKGROUND ART

In recent years, digital transformation (DX) has been accelerating across various industries. The customer service industry has been strongly affected by labor shortages and is also undergoing DX. To improve productivity and address labor shortages, introduction of remote customer service systems has been attracting growing attention.

For example, Japanese Patent No. 7587779 discloses a method for providing remote customer service considering an overall situation around a remote customer service device by using a plurality of video images, thereby improving the quality of the customer service.

Also in financial institutions such as banks, labor shortages and increase in small-staffed branches are expected to grow in coming years. Consequently, promoting DX in financial institutions is becoming increasingly important.

Conventionally, in financial institutions, there are money deposit/withdrawal apparatuses operated exclusively by bank employees (clerks), which makes it difficult to promote DX. This is because enabling customers themselves to operate the money deposit/withdrawal apparatuses, which have been operated by bank employees, requires supporting both the customers who are unfamiliar with operating the apparatuses, and the bank employees assisting the customers. When an error occurs in a money deposit/withdrawal apparatus, a prompt action is required. However, it is difficult to promptly respond to the error in the money deposit/withdrawal apparatus by the conventional technique. This issue arises not only with money deposit/withdrawal apparatuses installed in a customer area but also with money handling apparatuses installed in the back offices of financial institutions, and money handling apparatuses installed in stores other than financial institutions.

### SUMMARY

The present disclosure has been made in view of the problem, as well as other problems, of the conventional art, and the present disclosure addresses these issues, as discussed herein, with a remote customer service system and a remote customer service method capable of providing efficient support when a customer and/or a staff member operates a money handling apparatus installed in a store.

A remote customer service system according to one aspect of the present disclosure includes: a money handling apparatus installed in a first facility; and an operator terminal located at a second facility different from the first facility. The money handling apparatus includes a first communication interface and first circuitry. The first circuitry controls the first communication interface to transmit a discrepancy error to the operator terminal in a case where the first circuitry detects the discrepancy error related to a discrepancy occurring in the money handling apparatus. The operator terminal includes a second communication interface and second circuitry. The second circuitry controls the second communication interface to establish a connection with a customer terminal installed in the first facility and executes a remote customer service based on receiving the discrepancy error.

In the above configuration, the first circuitry may determine that an error in the money handling apparatus is not the discrepancy error, and the first circuitry may notify a predetermined management terminal in the first facility of the error.

In the above configuration, the operator terminal may include an operator display configured to display information on the discrepancy error received from the money handling apparatus.

In the above configuration, the money handling apparatus may include a storage for storing money therein and an apparatus display configured to display information related to money handling in which the discrepancy error is detected during the money handling by the money handling apparatus. The customer terminal may include a customer display configured to display information related to executing the remote customer service based on receiving the discrepancy error.

In the above configuration, the operator display may be configured to display information synchronized with information on the customer display each time a displayed screen of the customer display is updated.

In the above configuration, the customer terminal may include a speaker. The speaker may be configured to output information based on audio data transmitted from the operator terminal. The customer display may be configured to display information based on video data transmitted from the operator terminal.

In the above configuration, the customer terminal may be configured to display an avatar on the customer display and configured to execute the remote customer service via the avatar based on the video data and the audio data.

In the above configuration, the operator terminal may transmit, via the second communication interface, pointer information to the customer terminal. The pointer information may be used for controlling a pointer displayed on the customer display based on an input by an input device connected to the operator terminal.

In the above configuration, the second circuitry may be configured to receive the discrepancy error via a first network and configured to establish a connection to the customer terminal via a second network different from the first network, to execute the remote customer service.

In the above configuration, the second circuitry may execute the remote customer service via the second network only in response to receiving the discrepancy error.

A remote customer service method according to one aspect of the present disclosure is used in a remote customer service system comprising a money handling apparatus installed in a first facility and an operator terminal located at a second facility different from the first facility. The method includes: detecting, by first circuitry of the money handling apparatus, a discrepancy error related to a discrepancy in the money handling apparatus; transmitting, by a first communication interface of the money handling apparatus, the discrepancy error to the operator terminal; establishing, by second circuitry of the operator terminal, a connection with a customer terminal installed in the first facility based on receiving the discrepancy error; and executing, by the second circuitry of the operator terminal, a remote customer service.

### BRIEF DESCRIPTION OF THE DRAWINGS

FIG. 1 shows an outline of a remote customer service system according to Embodiment 1;
FIG. 2 shows the system configuration of the remote customer service system according to Embodiment 1;
FIG. 3 shows the external configuration of a money deposit/withdrawal apparatuses shown in FIG. 2;
FIG. 4 is a function block diagram showing the configuration of the money deposit/withdrawal apparatuses shown in FIG. 2;
FIG. 5 shows the external configuration of the remote customer service terminal shown in FIG. 2;
FIG. 6 is a function block diagram showing the configuration of a support terminal shown in FIG. 2;
FIG. 7 shows an example of a display screen in the money deposit/withdrawal apparatus;
FIG. 8 is a flowchart showing a processing procedure performed when an error occurs, according to Embodiment 1;
FIG. 9 shows an example of a hardware configuration according to Embodiment 1; and
FIG. 10 illustrates an outline of a remote customer service system according to Embodiment 2.

### DESCRIPTION OF EMBODIMENTS

Hereinafter, an embodiment of a remote customer service system and a remote customer service method according to the present disclosure will be described with reference to the drawings. The remote customer service system and a remote customer service method provide efficient support for a user operating a money handling apparatus installed in a store. In the following description, a money deposit/withdrawal apparatus that can perform depositing of money to be deposited into financial accounts and dispensing of money withdrawn from financial accounts in response to receiving instructions from the user is described as an example of the money handling apparatus.

### [Embodiment 1]

### <Outline of remote customer service system of

### Embodiment 1>

The outline of a remote customer service system according to Embodiment 1 will be described. In the remote customer service system according to Embodiment 1, when an error occurs while a customer is operating a money deposit/withdrawal apparatus 10 installed in a financial institution (a first facility), if this error is highly likely to cause a cash discrepancy, discrepancy error data is transmitted to an operation center (a second facility). Thus, an operator in the operation center can support the customer and an employee of the financial institution to handle the error. The operation center may also be referred to as an operator center or a call center.

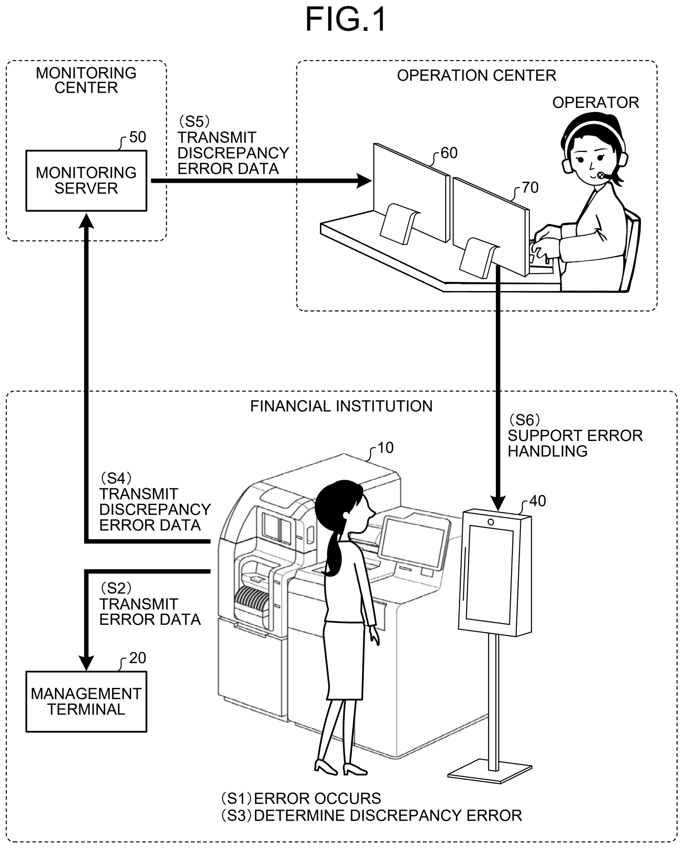

FIG. 1 shows the outline of the remote customer service system according to Embodiment 1. The remote customer service system comprises a money deposit/withdrawal apparatus (a money handling apparatus) 10 installed in a financial institution (first facility) and a support terminal (an operator terminal) 70 located at an operation center (a second facility) different from the financial institution. As shown in FIG. 1, in the remote customer service system, when an error occurs while the customer is operating a money deposit/withdrawal apparatus 10 (S1), error data regarding the error is transmitted to a management terminal 20 in the financial institution (S2). The management terminal 20 displays the received error data. Upon confirming this display, the employee of the financial institution assists the customer.

If the money deposit/withdrawal apparatus 10 determines that the error is a discrepancy error that is highly likely to cause a cash discrepancy (S3), the money deposit/withdrawal apparatus 10 transmits discrepancy error data to a monitoring server 50 in a monitoring center (S4).

Upon receiving the discrepancy error data, the monitoring server 50 transmits the discrepancy error data to a monitoring terminal 60 in the operation center (S5). The monitoring terminal 60 displays the received discrepancy error data. Upon confirming the display, the operator connects a support terminal (an operator termina) 70 to a remote customer service terminal (a customer terminal) 40 installed adjacent to the money deposit/withdrawal apparatus 10 in which the discrepancy error has occurred. The operator supports the customer and the employee in handling the error (S6). The support is performed by using the remote customer service terminal 40 from the operation center.

As described above, in the remote customer service system according to Embodiment 1, when a discrepancy error occurs while the customer is operating the money deposit/withdrawal apparatus, the discrepancy error data is transmitted to the operation center so that the operator can support the customer and the employee of the financial institution in handling the error, by using the support terminal and the remote customer service terminal. This makes it possible to provide efficient support when the customer or the staff member operates the money deposit/withdrawal apparatus.

In the above configuration, when the monitoring terminal 60 has received the discrepancy error data, the remote customer service terminal 40 and the support terminal 70 may be automatically connected to each other. A single terminal apparatus having the functions of the monitoring terminal 60 and the support terminal 70 may be provided in the operation center. The discrepancy error may be transmitted directly from the money deposit/withdrawal apparatus 10 to the monitoring terminal 60.

### <System configuration of remote customer service system of Embodiment 1>

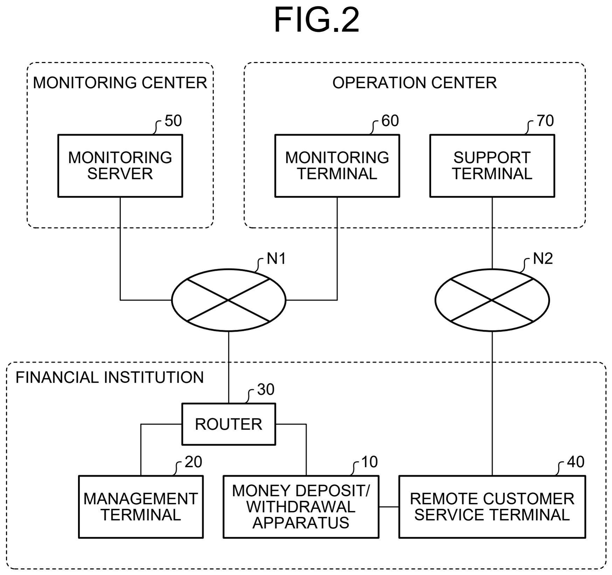

The system configuration of a remote customer service system according to Embodiment 1 will be described. FIG. 2 shows the system configuration of the remote customer service system according to Embodiment 1.

As shown in FIG. 2, a money deposit/withdrawal apparatus 10, a remote customer service terminal 40 and a management terminal 20 are installed in a financial institution. Customers use the money deposit/withdrawal apparatus 10 to perform deposit/withdrawal of money. The remote customer service terminal 40 is installed adjacent to the money deposit/withdrawal apparatus 10. The management terminal 20 is used by employees of the financial institution. The money deposit/withdrawal apparatus 10 and the management terminal 20 are connected to a network N1 via a router 30. The remote customer service terminal 40 is connected to the money deposit/withdrawal apparatus 10 and to a network N2.

A monitoring server 50 is installed in a monitoring center. The monitoring server 50 is connected to the network N1. A monitoring terminal 60 and a support terminal 70 are installed in the operation center. The monitoring terminal 60 is connected to the network N1 while the support terminal 70 is connected to the network N2.

The control circuitry (second circuitry) 77 is configured to receive the discrepancy error via the network N1 (a first network), and is configured to establish a connection to the remote customer service terminal (the customer terminal) 40, via the network N2 (a second network) different from the network N1. The control circuitry 77 is configured to execute the remote customer service. The control circuitry 77 executes the remote customer service via the network N2 only in response to receiving the discrepancy error.

The money deposit/withdrawal apparatus 10 is a money handling apparatus that performs depositing of money and/or dispensing of money upon receiving an operation from the customer and the employee. When the money deposit/withdrawal apparatus 10 has read user identification information through its own card reader, the apparatus 10 authenticates whether the user identification information is valid.

Upon receiving a deposit/withdrawal instruction, the money deposit/withdrawal apparatus 10 performs a money deposit/withdrawal process based on the instruction, and stores the result of the process.

When an error occurs in the money deposit/withdrawal apparatus 10, the money deposit/withdrawal apparatus 10 transmits, to the management terminal 20, error data including its own device ID.

Upon determining that the occurred error is a discrepancy error, the money deposit/withdrawal apparatus 10 transmits, to the monitoring server 50, discrepancy error data including its own device ID.

Upon receiving a staff-call request, the money deposit/withdrawal apparatus 10 transmits, to the management terminal 20, call data including its own device ID.

The management terminal 20 is a terminal provided for the employee of the financial institution. Upon receiving the error data or the call data from the money deposit/withdrawal apparatus 10, the management terminal 20 displays the device ID and the data content included in the received data. At this time, the management terminal 20 may perform additional notification actions such as changing the color of the display screen, turning on a lamp, or issuing a voice announcement.

The router 30 is a device that mediates transmission and reception of information on the money deposit/withdrawal apparatus 10. The router 30 transfers the error data and the call data transmitted from the money deposit/withdrawal apparatus 10, to the management terminal 20. As for the discrepancy error data, the router 30 transmits the discrepancy error data to the monitoring server 50 via the network N1.

The monitoring server 50 is installed in the monitoring center. The monitoring server 50 manages the discrepancy error data of the money deposit/withdrawal apparatus 10. Upon receiving the discrepancy error data from the money deposit/withdrawal apparatus 10, the monitoring server 50 stores the discrepancy error data therein, and transmits the same to the monitoring terminal 60.

The monitoring terminal 60 is installed in the operation center. The monitoring terminal 60 displays the discrepancy error data of the money deposit/withdrawal apparatus 10. Upon receiving the discrepancy error data from the monitoring server 50, the monitoring terminal 60 displays the device ID and the error content included in the received discrepancy error data. At this time, the monitoring terminal 60 may perform additional notification actions such as changing the color of the display screen, turning on a lamp, or issuing a voice announcement.

The support terminal 70 is installed in the operation center. The support terminal 70 is used to provide support for handling an error in the money deposit/withdrawal apparatus 10. Upon receiving the device ID of the money deposit/withdrawal apparatus 10, the support terminal 70 transmits a connection request to the remote customer service terminal 40 corresponding to the device ID, thereby establishing a connection with the remote customer service terminal 40.

The support terminal 70 receives screen data from the remote customer service terminal 40, and displays the received data. The support terminal 70 controls a pointer displayed on the remote customer service terminal 40 based on a mouse operation performed on the support terminal 70. That is, the support terminal 70 remotely controls the remote customer service terminal 40.

When voice is inputted through a headset connected to the support terminal 70, the support terminal 70 transmits audio data to the remote customer service terminal 40 so that the voice is outputted from the terminal 40. The support terminal 70 receives audio data of voice of a user of money deposit/withdrawal apparatus 10 from the remote customer service terminal 40, and outputs the voice from the headset.

The remote customer service terminal 40 is installed adjacent to the money deposit/withdrawal apparatus 10. The remote customer service terminal 40 supports the customer and the employee in handling the error. Upon receiving a connection request from the support terminal 70, the remote customer service terminal 40 establishes a connection with the support terminal 70.

The remote customer service terminal 40 transmits, to the support terminal 70, the screen data including information on contents displayed on the remote customer service terminal 40. This transmission is performed each time the displayed screen is updated.

The remote customer service terminal 40 displays the data received from the support terminal 70. When audio data is included in the received data, the remote customer service terminal 40 outputs the audio data from a built-in speaker. The data display and the audio output may be performed using an avatar displayed on the remote customer service terminal 40 so that the avatar provides an explanation to the user of the money deposit/withdrawal apparatus 10.

The remote customer service terminal 40 transmits, to the support terminal 70, video data captured by a built-in camera and audio data inputted to a built-in microphone.

### <External configuration of money deposit/withdrawal apparatus 10>

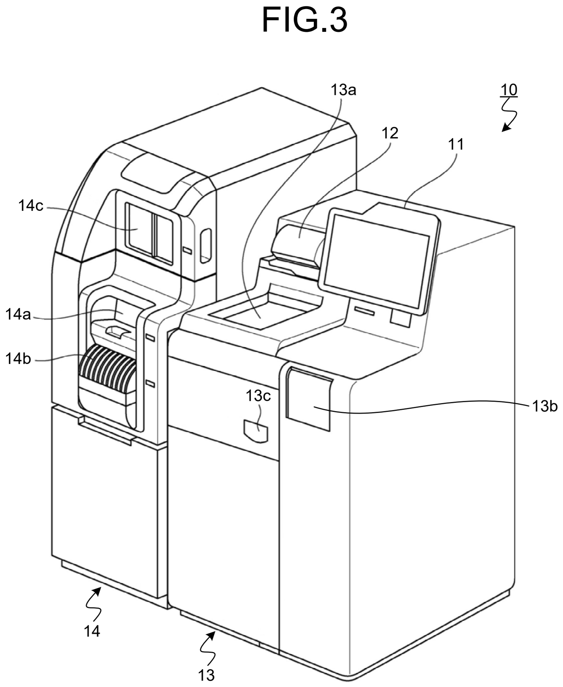

The external configuration of the money deposit/withdrawal apparatus 10 shown in FIG. 2 will be described. FIG. 3 shows the external configuration of the money deposit/withdrawal apparatus 10 shown in FIG. 2.

As shown in FIG. 3, the money deposit/withdrawal apparatus (the money handling apparatus) 10 includes a coin handling apparatus 13 and a banknote handling apparatus 14 aligned in the right-left direction. The coin handling apparatus 13 includes a coin depositing unit 13a that accepts depositing of coins (money) to store the coins in a storage (a container), a coin dispensing unit 13b that dispenses coins, a coin rejection unit 13c that returns unrecognizable coins and the like.

The banknote handling apparatus 14 includes a banknote depositing unit 14a that accepts depositing of banknotes (money) to store the banknotes in a storage (a container), a loose-banknote dispensing unit 14b that dispenses loose banknotes, a bundled-banknote dispensing unit 14c that dispenses bundled banknotes, and the like. An operation/display unit (an apparatus display) 11, a printer 12, etc., are disposed on the coin handling apparatus 13.

### <Configuration of money deposit/withdrawal apparatus 10>

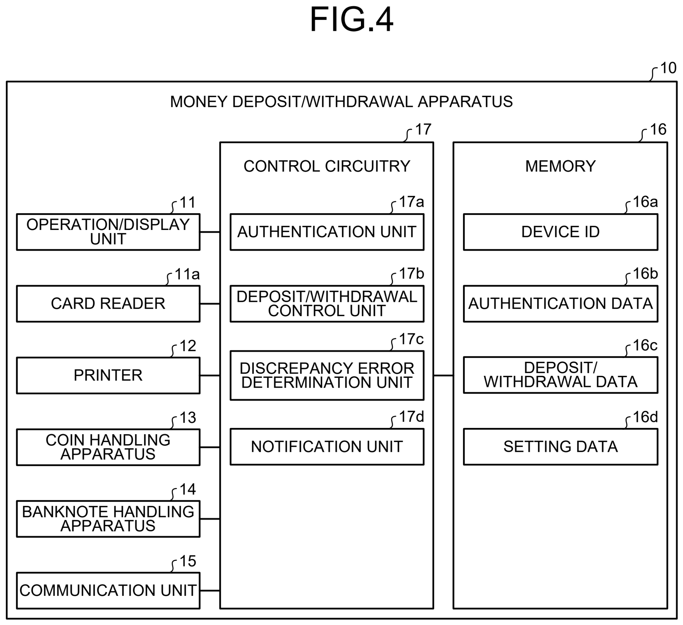

The configuration of the money deposit/withdrawal apparatus 10 shown in FIG. 2 will be described. FIG. 4 is a function block diagram showing the configuration of the money deposit/withdrawal apparatus 10 shown in FIG. 2.

As shown in FIG. 4, the money deposit/withdrawal apparatus 10 includes an operation/display unit(an apparatus display) 11, a card reader 11a, a printer 12, a coin handling apparatus 13, a banknote handling apparatus 14, a communication unit (a first communication interface) 15, a memory 16, and control circuitry (first circuitry) 17.

The operation/display unit 11 is an input/output device such as a touch-panel type display device. The operation/display unit 11 accepts various operations related to deposit process of money and dispensing process of money and the like. The operation/display unit 11 displays various kinds of information. The operation/display unit (the apparatus display) 11 is configured to display information related to money handling in which the discrepancy error was detected. The discrepancy error may be detected during the money handling by the money deposit/withdrawal apparatus (the money handling apparatus) 10. The card reader 11a is a device that reads information such as user identification information registered on an IC card. The printer 12 is used to print the inventory amount, the history of handling, etc., on a sheet of paper and output the sheet.

The coin handling apparatus 13 performs depositing process, recognition process, denomination-based storage process, dispensing process, reconciliation process, etc., for coins. The banknote handling apparatus 14 performs depositing process, recognition process, denomination-based storage process, dispensing process, reconciliation process, etc., for banknotes.

The communication unit 15 is an interface unit for data communication with the management terminal 20 and the monitoring server 50 via the router 30. The communication unit 15 is an interface unit for data communication with the remote customer service terminal 40. The money deposit/withdrawal apparatus (the money handling apparatus) 10 includes a communication unit (a first communication interface) 15 and control circuitry (first circuitry) 17. The control circuitry (the first circuitry) 17 controls the communication unit (the first communication interface) 15 to transmit a discrepancy error to the support terminal (the operator terminal) 70 in a case where the control circuitry (the first circuitry) 17 detects the discrepancy error related to a discrepancy occurring in the money handling apparatus.

The memory 16 is a storage device such as a hard disk or a non-volatile memory. The memory 16 has stored therein a device ID 16a, authentication data 16b, deposit/withdrawal data 16c, and setting data 16d.

The device ID 16a is data indicating the device ID of the money deposit/withdrawal apparatus 10. The authentication data 16b includes information for authentication as to whether the user identification information read by the card reader 11a is valid. For example, the authentication data 16b may be a list including valid user identification information. The authentication data 16b may include a pair of valid user identification information and a password, thereby enabling authentication using the password.

The deposit/withdrawal data 16c includes information for managing the amounts of deposited money and dispensed money using the money deposit/withdrawal apparatus 10. The setting data 16d includes a list of errors that are highly likely to cause a cash discrepancy in the money deposit/withdrawal apparatus 10.

The control circuitry 17 performs overall control for the money deposit/withdrawal apparatus 10. The control circuitry 17 includes an authentication unit 17a, a deposit/withdrawal control unit 17b, a discrepancy error determination unit 17c, and a notification unit 17d. In actuality, a program corresponding to the control circuitry 17 is loaded onto a CPU (Central Processing Unit) and executed, whereby processes corresponding to the authentication unit 17a, the deposit/withdrawal control unit 17b, the discrepancy error determination unit 17c, and the notification unit 17d are executed.

The authentication unit 17a determines whether the user identification information read by the card reader 11a is valid. When the user identification information has been read by the card reader 11a, the authentication unit 17a authenticates whether the user identification information is valid, by using the authentication data 16b. If the authentication data 16b includes a password, authentication using the password can be performed.

The deposit/withdrawal control unit 17b controls depositing/withdrawal of money, and manages the deposit/withdrawal data 16c. The deposit/withdrawal control unit 17b causes the coin handling apparatus 13 and the banknote handling apparatus 14 to perform processing corresponding to a deposit/withdrawal instruction inputted through the operation/display unit 11, thereby updating the deposit/withdrawal data 16c. In response to the deposit instructions, the coin handling apparatus 13 and the banknote handling apparatus 14 receive banknotes and coins to be deposited into financial accounts and stores them inside the apparatuses 13, 14. In response to the withdrawal instructions, the coin handling apparatus 13 and the banknote handling apparatus 14 dispense banknotes and coins withdrawn from financial accounts.

The discrepancy error determination unit 17c determines, when an error occurs in the money deposit/withdrawal apparatus 10, whether the error corresponds to a discrepancy error. When an error occurs in the apparatus 10, the discrepancy error determination unit 17c refers to the setting data 16d, and determines that the error is a discrepancy error if the error matches an error registered in the setting data 16d.

The notification unit 17d transmits the error data, the discrepancy error data, and the call data to predetermined external apparatuses. When an error occurs in the money deposit/withdrawal apparatus 10, the notification unit 17d transmits, to the management terminal 20, error data including the device ID of the apparatus 10.

When the discrepancy error determination unit 17c has determined that the occurred error is a discrepancy error, the notification unit 17d transmits, to the monitoring server 50, discrepancy error data including the device ID of the apparatus 10.

When "Call Staff" displayed on the operation/display unit 11 is selected, the notification unit 17d transmits, to the management terminal 20, call data including the device ID of the apparatus 10.

### <External configuration of remote customer service terminal 40>

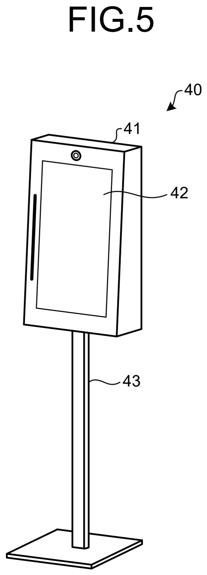

The external configuration of the remote customer service terminal (the customer terminal) 40 shown in FIG. 2 will be described. FIG. 5 shows the external configuration of the remote customer service terminal 40 shown in FIG. 2.

As shown in FIG. 5, the remote customer service terminal 40 includes a main body 41, an operation/display unit (a customer display) 42, and a leg portion 43. The operation/display unit 42 displays the data received from the support terminal 70. Upon receiving audio data from the support terminal 70, the remote customer service terminal 40 outputs the audio data from a built-in speaker. In performing the data display and the voice output, an avatar may be displayed so that the avatar provides an explanation.

The remote customer service terminal 40 has a built-in camera and microphone. The remote customer service terminal 40 transmits, to the support terminal 70, video data captured by the camera and audio data inputted through the microphone. The remote customer service terminal 40 includes a control circuitry configured to perform a process to connect the remote customer service terminal 40 with the support terminal 70 in response to a connection request from the support terminal 70. The remote customer service terminal 40 further includes a display configured to display video data transmitted from the support terminal 70, and an audio output device such as a speaker configured to output audio data transmitted from the support terminal 70.

The remote customer service terminal (customer terminal) 40 includes the speaker. The speaker is configured to output information based on audio data transmitted from the support terminal (operator terminal) 70. The remote customer service terminal (the customer terminal) 40 includes the operation/display unit (the customer display) 42. The operation/display unit 42 is configured to display information based on video data transmitted from the support terminal 70.

The operation/display unit 42 is configured to display information for executing the remote customer service based on the discrepancy error being received.

The remote customer service terminal (the customer terminal) 70 is configured to display an avatar on the operation/display unit 42 and configured to execute the remote customer service via the avatar based on the video data and the audio data.

### <Configuration of support terminal 70>

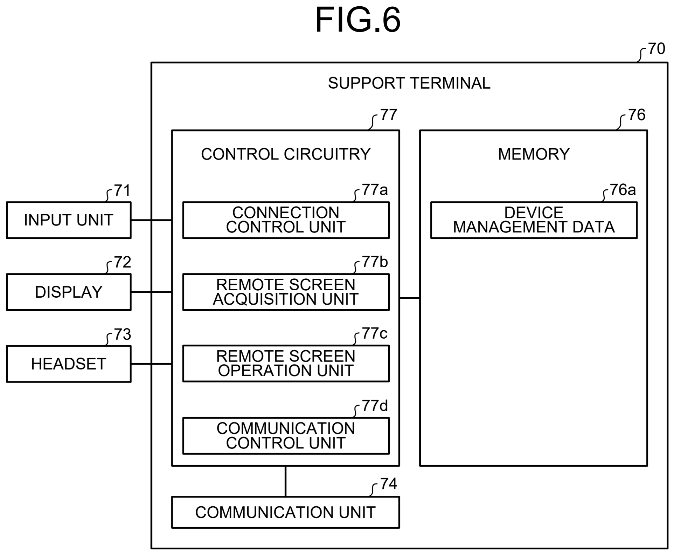

The configuration of the support terminal 70 shown in FIG. 2 will be described. FIG. 6 is a function block diagram showing the configuration of the support terminal 70 shown in FIG. 2. As shown in FIG. 6, the support terminal 70 is connected to an input unit 71, a display (an operator display) 72, and a headset 73 including a speaker. The support terminal 70 includes a communication unit 74, a memory 76, and a control circuitry 77.

The support terminal (the operator terminal) 70 includes a communication unit (a second communication interface) 74 and control circuitry (second circuitry) 77. The control circuitry 77 controls the communication unit 74 to establish a connection with a remote customer service terminal (a customer terminal) 40 installed in the financial institution (the first facility) and execute a remote customer service based on receiving the discrepancy error.

The input unit 71 is an input device such as a keyboard, a mouse, or the like. The display 72 is a display device such as a liquid-crystal panel. The headset 73 is an input/output device that is worn on the head of the operator, and performs audio input and audio output. The communication unit 74 is a communication interface for connecting the support terminal 70 to the remote customer service terminal 40 via the network N2.

The memory 76 is a storage device such as a hard disk or a non-volatile memory. The memory 76 has stored therein, device management data 76a. The device management data 76a includes information on the correspondence between the money deposit/withdrawal apparatus 10 and the remote customer service terminal 40. Specifically, the device management data 76a indicates the correspondence between the device ID of the money deposit/withdrawal apparatus 10 and the device ID of the remote customer service terminal 40.

The control circuitry 77 performs overall control for the support terminal 70. The control circuitry 77 includes a connection control unit 77a, a remote screen acquisition unit 77b, a remote screen operation unit 77c, and a communication control unit 77d. In actuality, a program corresponding to the control circuitry 77 is loaded onto a CPU and executed, whereby processes corresponding to the connection control unit 77a, the remote screen acquisition unit 77b, the remote screen operation unit 77c, and the communication control unit 77d are executed.

The support terminal (the operator terminal) 70 includes a display (an operator display) 72 configured to display information on the discrepancy error received from the money deposit/withdrawal apparatus (money handling apparatus) 10.

The display 72 is configured to display information synchronized with information on the operation/display unit (customer display) 42 of the remote customer service terminal 40 each time a displayed screen of the operation/display unit 42 is updated.

The connection control unit 77a performs control for a connection with the remote customer service terminal 40. Upon receiving the device ID of the money deposit/withdrawal apparatus 10 from the input unit 71, the connection control unit 77a specifies the device ID of the remote customer service terminal 40 corresponding to the received device ID, by referring to the device management data 76a. Then, the connection control unit 77a transmits a connection request to the remote customer service terminal 40 corresponding to the specified device ID, and establishes a connection with the remote customer service terminal 40.

The remote screen acquisition unit 77b acquires screen data of the remote customer service terminal 40. Upon receiving the screen data from the remote customer service terminal 40, the remote screen acquisition unit 77b displays the received data on the display 72.

The remote screen operation unit 77c controls a screen operation of the remote customer service terminal 40. The remote screen operation unit 77c controls a pointer displayed on the remote customer service terminal 40 through the input unit 71. Specifically, the pointer is controlled through an operation with a mouse of the input unit 71. For example, when the pointer is moved to a "Call Staff" button displayed on the remote customer service terminal 40 and the button is clicked by operating the mouse of the support terminal 70, the employee of the financial institution is notified of a call request from the remote customer service terminal 40. The support terminal (the operator terminal) 70 transmits, via the second communication interface (the second communication interface) 74, pointer information to the remote customer service terminal (customer terminal) 40. The pointer information is for controlling a pointer displayed on the operation/display unit (the customer display) 42 based on an input by an input device connected to the support terminal 70.

The communication control unit 77d controls communication with the remote customer service terminal 40. When voice is inputted to the headset 73, the communication control unit 77d transmits audio data to the remote customer service terminal 40. Upon receiving audio data from the remote customer service terminal 40, the communication control unit 77d outputs the received data, as voice, from the headset 73.

### <Example of display screen of money deposit/withdrawal apparatus 10>

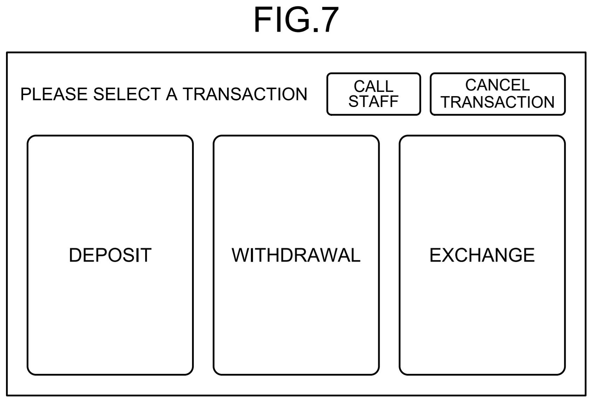

An example of a screen displayed on the operation/display unit 11 of the money deposit/withdrawal apparatus 10 will be described. FIG. 7 shows an example of the screen displayed on the money deposit/withdrawal apparatus 10. The screen shown in FIG. 7 is the initial screen which serves as the standby screen for receiving a customer operation.

As shown in FIG. 7, the initial screen displays the menus of money handling operations that can be performed using the money deposit/withdrawal apparatus 10. Specifically, the initial screen displays "Deposit", "Withdrawal", and "Exchange" buttons. In addition to these menu buttons, "Call Staff" and "Cancel Transaction" buttons are also displayed on the initial screen.

When the "Deposit", "Withdrawal", or "Exchange" button is selected, the screen transitions to the corresponding screen. The "Call Staff" and "Cancel Transaction" buttons always remain displayed in other screens. When "Call Staff" is selected, call data for calling the employee of the financial institution is transmitted to the management terminal 20. When "Cancel Transaction" is selected, the transaction content up to that point in time is cleared, and the initial screen is displayed.

### <Processing procedure when error occurs>

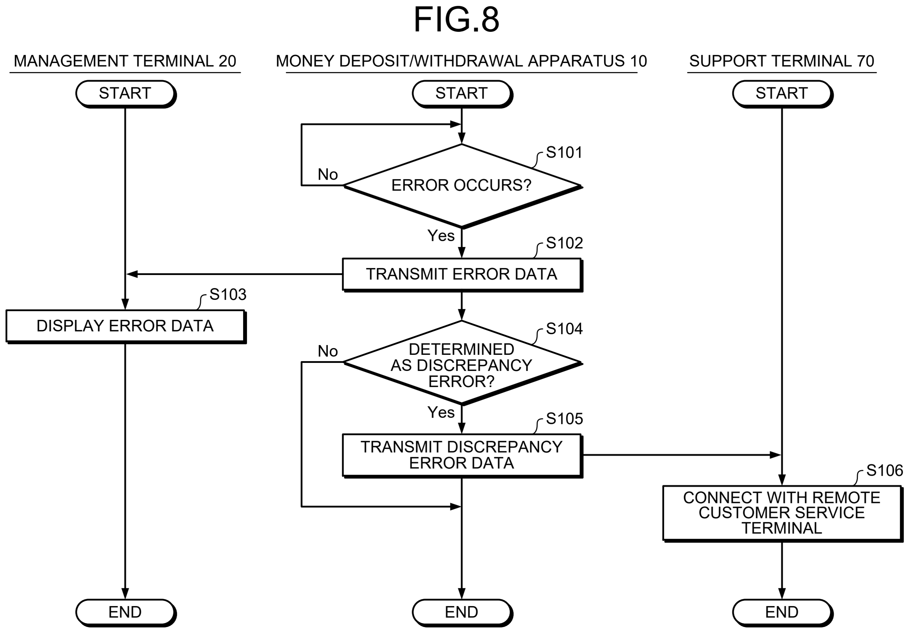

A processing procedure performed when an error occurs, according to Embodiment 1, will be described. FIG. 8 is a flowchart showing the processing procedure performed when an error occurs, according to Embodiment 1.

As shown in FIG. 8, when an error occurs in the money deposit/withdrawal apparatus 10 (S101: Yes), error data is transmitted to the management terminal 20 (step S102). Upon receiving the error data, the management terminal 20 displays the received error data (step S103).

Upon determining that the error that has occurred in the money deposit/withdrawal apparatus 10 does not correspond to a discrepancy error (step S104: No), the money deposit/withdrawal apparatus 10 ends the processing. In a case where the control circuitry (the first circuitry) 17 determines that an error in the money handling apparatus is not the discrepancy error, the control circuitry 17 may notify a predetermined management terminal 20 in the financial institution (the first facility) of the error. Upon determining that the error corresponds to a discrepancy error (step S104: Yes), the money deposit/withdrawal apparatus 10 transmits discrepancy error data to the support terminal 70 (step S105).

Upon receiving the discrepancy error data, the support terminal 70 transmits a connection request to the remote customer service terminal 40, establishes a connection with the remote customer service terminal 40 (step S106), and ends the processing.

### <Example of hardware configuration of Embodiment 1>

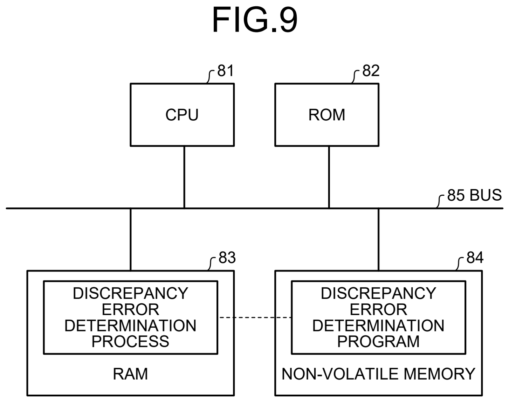

The correspondence between the money deposit/withdrawal apparatus 10 of the remote customer service system according to Embodiment 1, and a hardware configuration of a computer will be described. FIG. 9 shows an example of the hardware configuration according to Embodiment 1.

In general, a computer has a configuration in which a CPU 81, a ROM 82, a RAM 83, a non-volatile memory 84, and the like are connected with each other by a bus 85. A hard disk drive may be provided instead of the non-volatile memory 84. For convenience of description, only the basic hardware configuration is shown in FIG. 9.

A program and the like necessary for activation of an operating system (hereinafter, simply referred to as "OS") are stored in the ROM 82 or the non-volatile memory 84, and the CPU 81 reads the program for the OS from the ROM 82 or the non-volatile memory 84 and executes it when it is powered on.

Meanwhile, various kinds of application programs to be executed on the OS are stored in the non-volatile memory 84, and the CPU 81 executes an application program while using the RAM 83 as a main memory, thereby executing a process corresponding to the application.

A discrepancy error determination program for the money deposit/withdrawal apparatus 10 of the remote customer service system according to Embodiment 1 is also stored in the non-volatile memory 84 or the like, as in the case of the other application programs, and the CPU 81 loads and executes the program. In the case of the money deposit/withdrawal apparatus 10 of the remote customer service system according to Embodiment 1, the discrepancy error determination program including routines corresponding to the authentication unit 17a, the deposit/withdrawal control unit 17b, the discrepancy error determination unit 17c, and the notification unit 17d shown in FIG. 4 is stored in the non-volatile memory 84 or the like. The discrepancy error determination program is loaded and executed by the CPU 81, whereby a discrepancy error determination process corresponding to the authentication unit 17a, the deposit/withdrawal control unit 17b, the discrepancy error determination unit 17c, and the notification unit 17d is generated.

As described above, in the remote customer service system according to Embodiment 1, if a discrepancy error occurs while the customer is operating the money deposit/withdrawal apparatus, discrepancy error data is transmitted to the operation center, and the operator can support the customer and/or the employee of the financial institution in handling the error, by using the support terminal and the remote customer service terminal. Therefore, it is possible to efficiently respond to the money deposit/withdrawal apparatus installed in the financial institution.

In Embodiment 1 described above, when an error that has occurred in the money deposit/withdrawal apparatus is determined to be a discrepancy error, discrepancy error data is transmitted to the monitoring server. However, the present disclosure is not limited thereto. When an error occurs in the money deposit/withdrawal apparatus, error data may be transmitted to the monitoring server.

In Embodiment 1 described above, the remote customer service method is applied to a remote customer service system including a money deposit/withdrawal apparatus installed in a financial institution. However, the present disclosure is not limited thereto. The remote customer service method may also be applied to systems including medical expense payment apparatuses in hospitals, self-checkout registers in retail stores, ticket vending apparatuses, and the like.

In Embodiment 1 described above, the data (text, figure, voice, etc.) transmitted from the support terminal is outputted using the remote customer service terminal. However, the present disclosure is not limited thereto. An avatar and/or a character generated by AI or the like may be displayed in accordance with the data transmitted from the support terminal.

In Embodiment 1 described above, when an error occurs in the money deposit/withdrawal apparatus, error data is transmitted to the management terminal. However, the present disclosure is not limited thereto. The destination of the error data may be a business PC, a portable terminal such as a tablet device or a smartphone, or a wearable device used by an employee.

### [Embodiment 2]

In Embodiment 1 described above, when an error occurs in the money deposit/withdrawal apparatus, the operator supports the customer and/or the employee by using the support terminal and the remote customer service terminal. However, the present disclosure is not limited thereto.

The operator may support the customer by using the support terminal and the remote customer service terminal when the call button is selected by the customer operating the money deposit/withdrawal apparatus. In Embodiment 2, the description is given for a remote customer service system in which, when a customer operating a money deposit/withdrawal apparatus selects a call button, an operator supports the customer by using a support terminal and a remote customer service terminal.

### <Outline of remote customer service system of

### Embodiment 2>

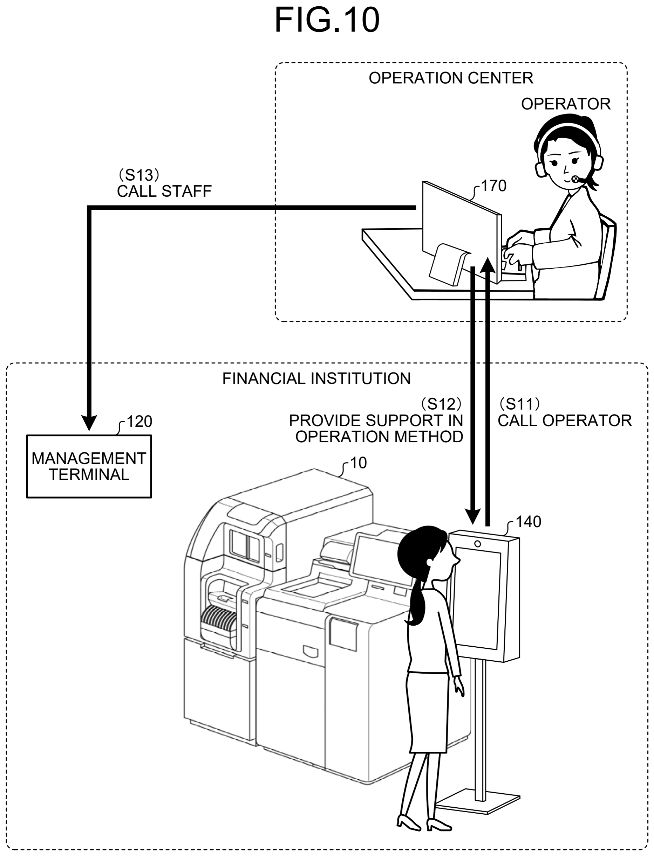

The outline of the remote customer service system according to Embodiment 2 will be described. FIG. 10 illustrates the outline of the remote customer service system according to Embodiment 2.

As shown in FIG. 10, when the customer selects "Call" displayed on the screen of the remote customer service terminal 140 while operating the money deposit/withdrawal apparatus 10, the remote customer service terminal 140 notifies the support terminal 170 of an operator call (S11).

Upon receiving the notification on the operator call, the support terminal 170 establishes a connection with the remote customer service terminal 140. Then, video and audio are outputted from the remote customer service terminal 140 in response to an operation performed by the operator, thereby providing support in the operation method for the money deposit/withdrawal apparatus 10 (S12).

When the operator performs a predetermined operation through the support terminal 170 for a staff call to call an employee of the financial institution, the support terminal 170 notifies the management terminal 120 of the staff call (S13).

The operator provides an explanation on how to operate the money deposit/withdrawal apparatus 10. Only when the operator needs to ask the employee to help the customer, the operator performs the staff call operation, thereby reducing the burden on the employee and allowing the employee to concentrate on his/her counter operations.

As described above, in Embodiment 2, when the customer operating the money deposit/withdrawal apparatus operates the call button, the operator supports the customer by using the support terminal and the remote customer service terminal. Therefore, it is possible to provide efficient support when the customer or the staff member operates the money deposit/withdrawal apparatus.

In the above embodiments, the remote customer service system according to the present disclosure includes a money deposit/withdrawal apparatus. However, the present disclosure is not limited thereto. The remote customer service system may include other types of money handling apparatus installed either in a financial institution or outside a financial institution.

The illustrated components in the above embodiments are conceptually functional constituent elements, and thus may not necessarily be configured as physical constituent elements, as illustrated in the drawings. That is, distributed or integrated forms of each device are not limited to the forms illustrated in the drawings, and all or some of the forms may be distributed or integrated functionally or physically in any unit depending on various loads, use statuses, or the like.

## Claims

1. A remote customer service system comprising a money handling apparatus (10) installed in a first facility and an operator terminal located at a second facility different from the first facility, wherein
the money handling apparatus (10) includes a first communication interface (15) and first circuitry (17), wherein the first circuitry (17) controls the first communication interface (15) to transmit a discrepancy error to the operator terminal (70) in a case where the first circuitry (17) detects the discrepancy error related to a discrepancy occurring in the money handling apparatus (10), and
the operator terminal (70) includes a second communication interface (74) and second circuitry (77), wherein the second circuitry (77) controls the second communication interface (74) to establish a connection with a customer terminal (40) installed in the first facility and executes a remote customer service based on receiving the discrepancy error.

2. The remote customer service system according to claim 1, wherein
the first circuitry (17) determines that an error in the money handling apparatus (10) is not the discrepancy error , and
the first circuitry (17) notifies a predetermined management terminal (20) in the first facility of the error.

3. The remote customer service system according to claim 1, wherein
the operator terminal (70) includes an operator display (72) configured to display information on the discrepancy error received from the money handling apparatus (10).

4. The remote customer service system according to claim 1, wherein
the money handling apparatus (10) includes a storage for storing money therein and an apparatus display (11) configured to display information related to money handling, in which the discrepancy error is detected, by the money handling apparatus (10), and
the customer terminal (40) includes a customer display (42) configured to display information related to executing the remote customer service based on receiving the discrepancy error.

5. The remote customer service system according to claim 4, wherein
the operator display (72) is configured to display information synchronized with information on the customer display (42) each time a displayed screen of the customer display (42) is updated.

6. The remote customer service system according to claim 4, wherein
the customer terminal (40) includes a speaker,
the speaker is configured to output information based on audio data transmitted from the operator terminal (70), and
the customer display (42) is configured to display information based on video data transmitted from the operator terminal (70).

7. The remote customer service system according to claim 6, wherein
the customer terminal (40) is configured to display an avatar on the customer display (42) and configured to execute the remote customer service via the avatar based on the video data and the audio data.

8. The remote customer service system according to claim 6, wherein
the operator terminal (70) transmits, via the second communication interface (74), pointer information to the customer terminal (40), the pointer information controlling a pointer displayed on the customer display (42) based on an input by an input device connected to the operator terminal (70).

9. The remote customer service system according to claim 1, wherein
the second circuitry (77) is configured to receive the discrepancy error via a first network and is configured to establish a connection to the customer terminal (40) via a second network different from the first network, to execute the remote customer service.

10. The remote customer service system according to claim 9, wherein
the second circuitry (77) executes the remote customer service via the second network only in response to receiving the discrepancy error.

11. A remote customer service method used in a remote customer service system comprising a money handling apparatus (10) installed in a first facility and an operator terminal (70) located at a second facility different from the first facility, the method comprising:
detecting, by first circuitry (17) of the money handling apparatus (10), a discrepancy error related to a discrepancy in the money handling apparatus (10);
transmitting, by a first communication interface (15) of the money handling apparatus (10), the discrepancy error to the operator terminal (70);
establishing, by second circuitry (77) of the operator terminal (70), a connection with a customer terminal (40) installed in the first facility based on receiving the discrepancy error; and
executing, by the second circuitry (77) of the operator terminal (70), a remote customer service.
